# EUROPEAN PATENT SPECIFICATION

(11) **EP 4 324 731 B1**
(45) Date of publication and mention of the grant of the patent: **06.05.2026**
(21) Application number: 23181192.8
(22) Date of filing: 23.06.2023
(51) Int. Cl.: B62J 35/00, B62J 6/04, B62J 43/16

(54) **REAR STRUCTURE OF STRADDLE-TYPE VEHICLE**
HINTERE STRUKTUR EINES GRÄTSCHSITZFAHRZEUGS
STRUCTURE ARRIÈRE DE VÉHICULE DE TYPE À ENFOURCHER

(30) Priority: 15.08.2022 JP 2022129235
(43) Date of publication of application: 21.02.2024
(73) Proprietor: Suzuki Motor Corporation, Hamamatsu-shi, Shizuoka 432-8611 (JP)
(72) Inventor: KAMBAYASHI, Takahiro, Hamamatsu-shi, 432-8611 (JP)
(74) Representative: Haseltine Lake Kempner LLP

(56) References cited:
- WO-A1-2022/091110
- GB-A- 2 553 380
- US-A- 5 421 427
- US-A1- 2012 103 710
- US-B2- 8 668 037
- US-B2- 8 970 061

## Description

### TECHNICAL FIELD

The present disclosure relates to a rear structure of a straddle-type vehicle.

### BACKGROUND ART

In a scooter-type straddle-type vehicle or the like, a fuel tank is often laid out inside a seat frame cover at a rear portion of the vehicle. As a straddle-type vehicle of this type, there is known a vehicle in which an upper wall of a housing space of a fuel tank is formed by an opening and closing cover (for example, see JPH02-155884A). In the straddle-type vehicle described in JPH02-155884A, the housing space of the fuel tank is ensured behind a seat, and the fuel tank is disposed in the housing space with a fuel supply port facing upward. The design of the rear portion of the straddle-type vehicle is improved by covering the fuel supply port of the fuel tank with the opening and closing cover as an exterior component.

In a rear structure of the straddle-type vehicle described in JPH02-155884A, in a case where lock of the opening and closing cover is released, the opening and closing cover is slightly opened, and a fingertip is inserted into a gap of the opening and closing cover to open the opening and closing cover. In order to automatically open the opening and closing cover, a complicated structure using a torsion spring, a damper or the like having a large stroke is required.

WO 2022/091110 A1 discloses a charging inlet assembly for a vehicle. The charging inlet assembly comprises one or more structural members which are removably mounted on each other such that if one of the structural members gets damaged, the charging inlet need not be removed from the vehicle and the damaged structural member can be removed and replaced by a new part.

### SUMMARY OF INVENTION

An object of the present disclosure is to provide a rear structure of a straddle-type vehicle capable of improving user convenience with a simple structure.

The scope of the present invention is defined by the appended claims.

According to the rear structure of a straddle-type vehicle of one aspect of the present disclosure, the opening and closing cover is automatically opened by its own weight in a case where the opening and closing cover is unlocked. A complicated structure using a torsion spring, a damper, or the like having a large stroke for opening the opening and closing cover by its own weight becomes unnecessary. Accordingly, it is possible to improve user convenience with a simple structure.

### BRIEF DESCRIPTION OF DRAWINGS

FIG. 1 is a left side view of a straddle-type vehicle according to a first embodiment.
FIG. 2 is a schematic rear view of a rear structure of the straddle-type vehicle according to the first embodiment.
FIG. 3 is a schematic cross-sectional view of the rear structure of FIG. 2 taken along a line A-A.
FIG. 4 is a schematic cross-sectional view of a rear structure of a straddle-type vehicle according to a second embodiment.
FIG. 5 is a schematic rear view of a rear structure of a straddle-type vehicle according to a modification.

### DESCRIPTION OF EMBODIMENTS

A fuel tank or a battery is disposed at a rear portion of a straddle-type vehicle according to an aspect of the present disclosure. A filler port of the fuel tank or a charging port of the battery is surrounded by a concave housing. The filler port of the fuel tank or the charging port of the battery is configured to be opened and closed by an opening and closing cover. The opening and closing cover is locked in a case where the opening and closing cover is closed. The opening and closing cover is configured to be opened by its own weight in a case where the opening and closing cover is unlocked. A complicated structure using a torsion spring, a damper, or the like having a large stroke for opening the opening and closing cover by its own weight becomes unnecessary. Accordingly, it is possible to improve user convenience with a simple structure.

### [Embodiment]

### <First Embodiment>

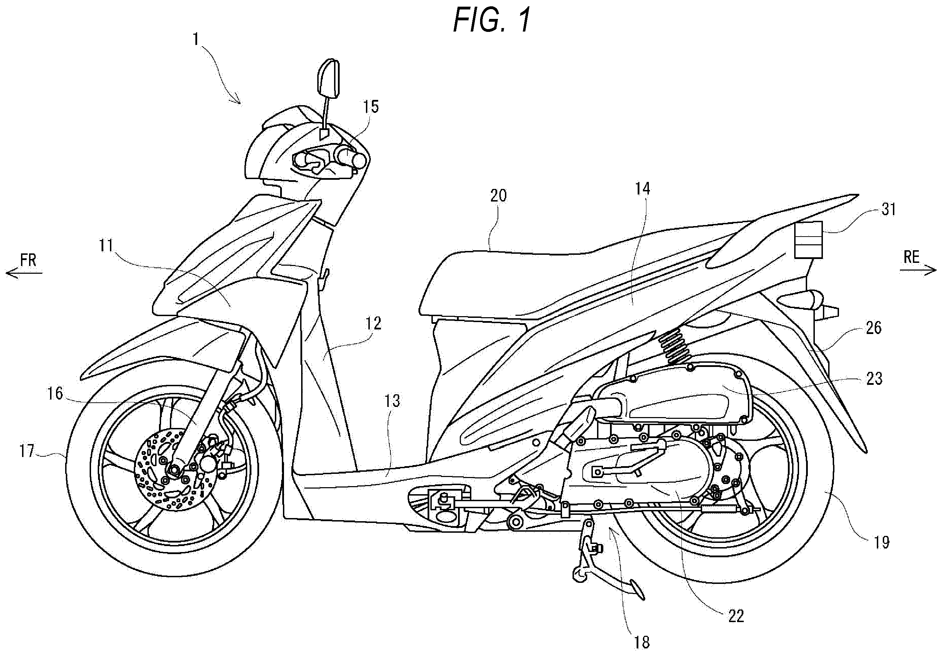

Hereinafter, a straddle-type vehicle according to a first embodiment will be described with reference to the accompanying drawings. FIG. 1 is a left side view of the straddle-type vehicle according to the first embodiment. In the following drawings, an arrow FR indicates a vehicle front side, an arrow RE indicates a vehicle rear side, an arrow L indicates a vehicle left side, and an arrow R indicates a vehicle right side.

As shown in FIG. 1, a straddle-type vehicle 1 of a scooter type is formed by mounting various covers, as a vehicle body exterior, on an underbone type vehicle body frame that is not shown. A front frame cover 11 is provided in the vehicle front side. A front leg shield 12 for protecting the foot of a rider is provided in a rear side of the front frame cover 11. A foot board 13 extends rearward from a lower end of the front leg shield 12. A seat frame cover 14 is provided behind the foot board 13. A foot rest space for the rider is formed in front of a seat 20 by the front leg shield 12 and the foot board 13.

A handle 15 is provided in an upper side of the front frame cover 11. A front wheel 17 is rotatably supported on a lower side of the front frame cover 11 via a pair of front forks 16. The seat 20 is provided above the seat frame cover 14. A unit swing type engine 18 is provided below the seat frame cover 14. The engine 18 is swingably connected to the vehicle body frame. A rear wheel 19 is rotatably supported by a rear portion of the engine 18. A left side surface of a crankcase of the engine 18 is covered with a CVT cover 22. An air cleaner 23 is provided above the CVT cover 22.

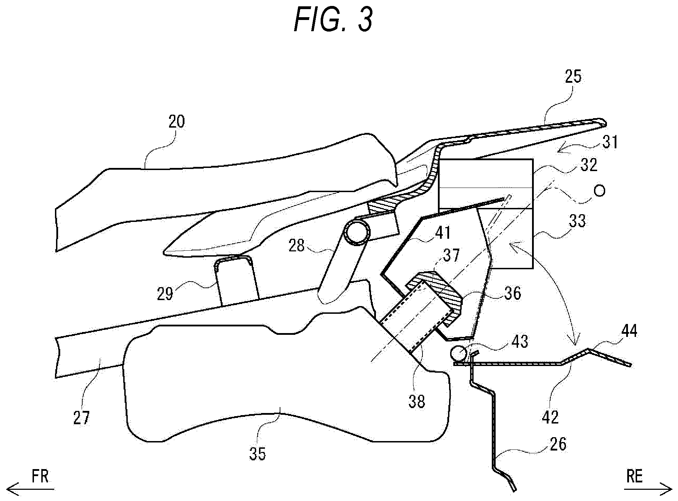

A fuel tank 35 (see FIG. 3) is disposed inside the seat frame cover 14. In such a layout, a fuel supply port of the fuel tank 35 is positioned below or behind the seat. In a case where the fuel supply port of the fuel tank 35 is positioned below the seat, the number of components and the like can be minimized. However, a user needs to get off the vehicle to open the seat 20. In a case where the fuel supply port of the fuel tank 35 is positioned at the rear of the seat, opening and closing of the seat 20 becomes unnecessary, and convenience is improved. Further, in order to improve the design of the rear portion of the vehicle, a configuration in which the filler port of the fuel tank 35 is covered with an opening and closing cover is studied.

A lock mechanism of a push latch type or the like is adopted for the opening and closing cover. In a case where the opening and closing cover is pushed in, the opening and closing cover is locked, and in a case where the opening and closing cover is pushed in again, the lock of the opening and closing cover is released. In a case where the opening and closing cover is unlocked, the opening and closing cover is slightly opened. However, it is necessary to manually open the opening and closing cover by hooking a fingertip on the opening and closing cover. In order to automatically open the opening and closing cover, a spring or the like having a large stroke is required, and the structure becomes complicated. Therefore, in the present embodiment, in a case where the opening and closing cover is unlocked, the opening and closing cover is configured to be opened downward by its own weight, thereby improving the user convenience in a case where the fuel is supplied.

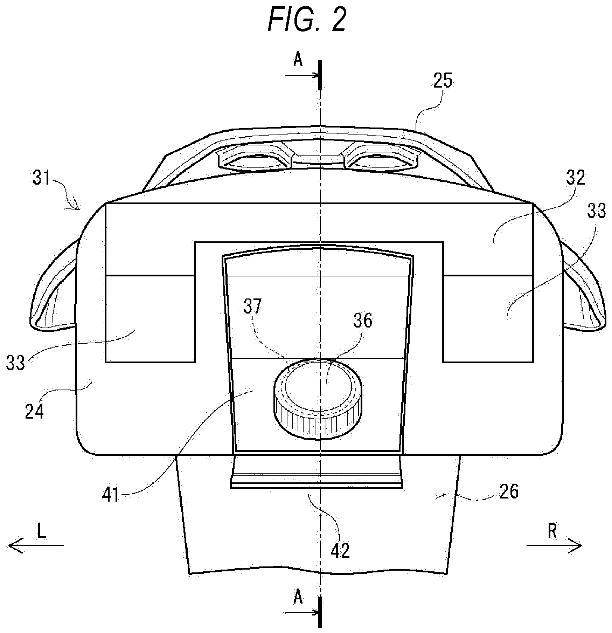

A rear structure of the straddle-type vehicle will be described with reference to FIGs. 2 and 3. FIG. 2 is a schematic rear view of the rear structure of the straddle-type vehicle according to the first embodiment. FIG. 3 is a schematic cross-sectional view of the rear structure of FIG. 2 taken along a line A-A.

As shown in FIG. 2, a lamp unit (lighting device) 31 is exposed from a tail cover 24 at the rear portion of the vehicle. An upper half portion of the lamp unit 31, which is long in a vehicle width direction, is a brake lamp 32. Lower half portions of the lamp unit 31, which are separated in the vehicle width direction, are a pair of left and right turn signal lamps 33. The brake lamp 32 is configured to be turned on in a case where the vehicle is decelerated. The pair of left and right turn signal lamps 33 are configured to be turned on in a case where the vehicle changes its course or turns left or right. A rear carrier 25 is positioned above the lamp unit 31 as an optional part. A load is placed on a top surface of the rear carrier 25 without blocking the light of the lamp unit 31.

A concave housing 41 is provided between the pair of left and right turn signal lamps 33. A rear surface of the concave housing 41 has an opening. The inside of the concave housing 41 is exposed to the outside through the opening. A fuel supply cap 36 of the fuel tank 35 protrudes from an inner bottom surface of the concave housing 41. The fuel supply port (filler port) 37 of the fuel tank 35 is exposed to the outside by removing the fuel supply cap 36. An opening and closing cover 42 is provided below the opening of the concave housing 41. The opening and closing cover 42 is formed in a design having a sense of unity with the tail cover 24. By closing the opening and closing cover 42, exposure of the fuel supply cap 36 is reduced, and design is improved.

The lamp unit 31 is formed in a concave shape, in a rear view. The concave housing 41 except for a lower part is surrounded by the lamp unit 31. More specifically, the brake lamp 32 except for both end parts in the vehicle width direction is recessed upward. The turn signal lamps 33 are connected to lower sides of both end parts, in the vehicle width direction, of the brake lamp 32. That is, the brake lamp 32 (lamp unit 31) is formed to avoid an upper portion of the concave housing 41. As described above, the brake lamp 32 is disposed in the tail cover 24 by effectively utilizing a narrow space above the concave housing 41.

As shown in FIG. 3, a pair of left and right seat frames 27 extend in a front-rear direction, inside the rear portion of the vehicle. Rear end portions of the pair of left and right seat frames 27 are connected by a bridge 28. The seat 20 is supported, from below, by the bridge 28. A bracket 29 is provided in front of the bridge 28 of the pair of left and right seat frames 27. The rear carrier 25 is attached to the bracket 29 and the bridge 28. A space to put the fuel tank 35 is formed between the pair of left and right seat frames 27, below the seat 20. A rear surface of the space is covered with the concave housing 41.

The fuel tank 35 is disposed in the space at the rear portion of the vehicle. A fuel supply pipe 38 extends from a rear portion of the fuel tank 35 toward the concave housing 41. The fuel supply pipe 38 of the fuel tank 35 protrudes rearward from the concave housing 41. The fuel supply cap 36 is detachably attached to a distal end of the fuel supply pipe 38. The fuel supply port 37 of the fuel supply pipe 38 is directed obliquely upward to the rear. Thus, a fuel supply nozzle is easily inserted into the fuel supply port 37, thereby improving the workability of a fuel supply work or filling work. The concave housing 41 is recessed toward an inner side (front side) of the vehicle body. The fuel supply port 37 attached to the fuel supply cap 36 is surrounded by the concave housing 41.

The opening and closing cover 42 is provided below the concave housing 41. The fuel supply port 37 attached to the fuel supply cap 36 is configured to be covered and uncovered by the opening and closing cover 42. A swing shaft 43 of the opening and closing cover 42 is provided along a lower edge of the opening of the concave housing 41. Thus, the swing shaft 43 is inconspicuous by an upper end portion of a rear fender 26, thereby improving the design of the rear portion of the vehicle. The opening and closing cover 42 is connected to a lower portion of the concave housing 41 to be opened downward around the swing shaft 43. The opening and closing cover 42 is configured to be swung in an upper-lower direction to take an upright posture in which the opening and closing cover 42 covers the concave housing 41, and a horizontal posture in which the opening and closing cover 42 uncovers the concave housing 41.

In the case where the opening and closing cover 42 is closed, the opening and closing cover 42 is locked in the upright posture by a lock mechanism that is not shown. As indicated by a two-dot chain line, the opening and closing cover 42 is inclined rearward from the swing shaft 43 toward an upper side, in a side view. Water droplets and sand dust are less likely to enter the inside of the concave housing 41 from above due to the inclination of the opening and closing cover 42. In a case where the opening and closing cover 42 is opened, the opening and closing cover 42 is maintained in the horizontal posture by a stopper that is not shown. A gentle step 44 is provided in a distal end side of the opening and closing cover 42. A place to put a cap of the fuel supply port 37 is formed on an inner surface of the opening and closing cover 42. The use of the inner surface of the opening and closing cover 42 as the space improves the workability of the fuel supply work.

In the case where the opening and closing cover 42 is closed, the opening and closing cover 42 is inclined upward and rearward. Thus, in a case where the lock of the opening and closing cover 42 is released, the opening and closing cover 42 is tilted rearward around the swing shaft 43, and the opening and closing cover 42 is automatically opened downward by its own weight. Therefore, the opening and closing cover 42 can be automatically opened without using a spring or the like having a long stroke. In addition, in the case where the opening and closing cover 42 is opened, a sufficient angle between a center line O of the fuel supply port 37 and the opening and closing cover 42 is formed. Therefore, in a case where the fuel supply nozzle is inserted into the fuel supply port 37, the opening and closing cover 42 does not interfere with the fuel supply nozzle.

The lamp unit 31 is configured to illuminate the rear of the vehicle behind the fuel tank 35. The brake lamp 32 is positioned above the concave housing 41. The turn signal lamps 33 are positioned on sides of the concave housing 41. Even in a layout in which the lamp unit 31 is positioned high and the fuel supply port 37 (the fuel supply cap 36) is disposed at the rear of the vehicle, visibility of the lamp unit 31 does not deteriorate. The brake lamp 32 is positioned above the fuel supply port 37 of the fuel tank 35, and the fuel dripping from the fuel supply port 37 during the fuel supply work is less likely to adhere to lens or the like of the brake lamp 32.

In a side view, the opening and closing cover 42 is disposed in a vehicle front side of the brake lamp 32. Since the rear surface of the brake lamp 32 protrudes rearward than the rear edge of the concave housing 41 and the opening and closing cover 42, the brake lamp 32 serves as an eaves and water droplets and sand dust are less likely to enter the inside of the concave housing 41 from above. In addition, the lamp unit 31 overlaps the concave housing 41, in a side view. More specifically, a part of the brake lamp 32 and the turn signal lamps 33 overlap the concave housing 41 in the upper-lower direction and the front-rear direction, and the lamp unit 31 and the concave housing 41 can be compactly disposed.

A top surface of the rear carrier 25 is positioned above the lamp unit 31. Since the top surface of the rear carrier 25 is separated upward from the fuel supply port 37 of the fuel tank 35, a sufficient work space is ensured at the rear of the vehicle, and the fuel supply work by the fuel supply nozzle is not hindered by the rear carrier 25. Further, since the lamp unit 31 (brake lamps 32) is interposed between the top surface of the rear carrier 25 and the opening and closing cover 42, the opening and closing cover 42 does not interfere with the rear carrier 25 even in a case where the top surface of the rear carrier 25 is lowered. Since the top surface of the rear carrier 25 is lowered, it is easy to load a load, and a center of gravity is lowered to improve operability.

As described above, according to the rear structure of the straddle-type vehicle 1 of the first embodiment, the opening and closing cover 42 is configured to be automatically opened by its own weight by releasing the lock of the opening and closing cover 42. A complicated structure using a torsion spring, a damper, or the like having a large stroke for opening the opening and closing cover 42 by its own weight becomes unnecessary. Accordingly, it is possible to improve user convenience with a simple structure.

### <Second Embodiment>

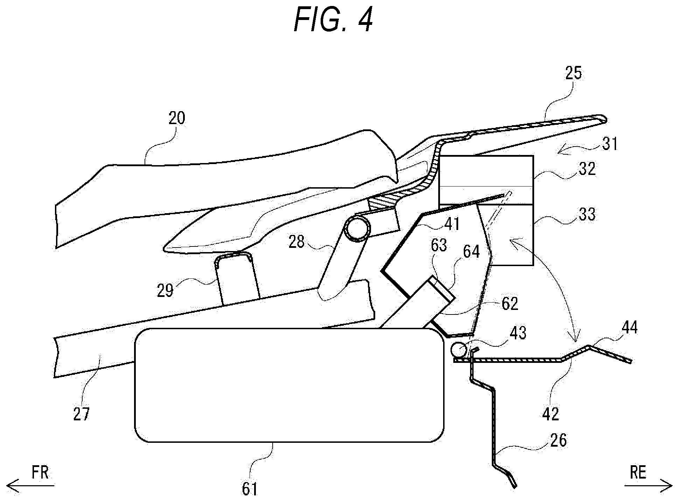

Next, a rear structure of a straddle-type vehicle according to a second embodiment will be described with reference to FIG. 4. The rear structure of a straddle-type vehicle according to the second embodiment is different, from the rear structure of a straddle-type vehicle according to the first embodiment, in that a battery is disposed instead of the fuel tank. In the second embodiment, the same configuration as that of the first embodiment will not be described. The same components as those of the first embodiment are denoted by the same reference numerals. FIG. 4 is a schematic cross-sectional view of the rear structure of a straddle-type vehicle according to the second embodiment.

As shown in FIG. 4, a space to put a battery 61 is formed between the pair of left and right seat frames 27, below the seat 20. A rear surface of the space is covered with the concave housing 41. The battery 61 is disposed in the space at the rear portion of the vehicle. A battery cable 62 extends from a rear portion of the battery 61 toward the concave housing 41. A charging port 63 at a distal end of the battery cable 62 protrudes rearward from the concave housing 41. A waterproof cap 64 is detachably attached to the charging port 63. The charging port 63 is directed obliquely upward to the rear. Thus, a charging nozzle is easily attached to the charging port 63, thereby improving the workability of a charging work.

The charging port 63 is surrounded by the concave housing 41. The charging port 63 is configured to be covered and uncovered by the opening and closing cover 42. In the case where the opening and closing cover 42 is closed, the opening and closing cover 42 is locked in the upright posture by a lock mechanism that is not shown. In a case where the opening and closing cover 42 is opened, the opening and closing cover 42 is maintained in the horizontal posture by a stopper that is not shown. Since the opening and closing cover 42 is inclined upward and rearward, in a case where the opening and closing cover 42 is unlocked, the opening and closing cover 42 is tilted rearward around the swing shaft 43, and the opening and closing cover 42 is automatically opened downward by its own weight.

Also in the second embodiment, the lamp unit 31 is positioned high in consideration of the visibility. In a side view, the opening and closing cover 42 is disposed in the vehicle front side of the brake lamp 32, and water droplets and sand dust are less likely to enter the inside of the concave housing 41. The lamp unit 31 is compactly installed to overlap the concave housing 41, in a side view. Further, the top surface of the rear carrier 25 is separated upward from the charging port 63 of the battery 61, and a work space for the charging work is sufficiently ensured. Note that the battery 61 may be installed at the rear portion of the vehicle.

As described above, even in the configuration in which the battery 61 is disposed instead of the fuel tank 35 as in the second embodiment, the opening and closing cover 42 is configured to automatically opened by its own weight. Accordingly, it is possible to improve user convenience with a simple structure.

### <Modification>

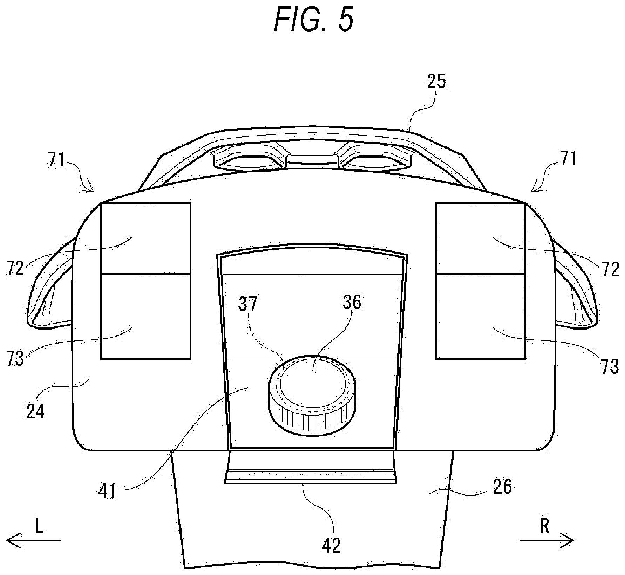

In the above embodiment, the configuration in which a single lamp unit is provided in the rear portion of the vehicle has been described, but the lamp unit may be separated to the left and right. For example, as shown in FIG. 5, a pair of left and right lamp units 71 separated in the vehicle width direction are exposed from the tail cover 24. An upper half portion of each lamp unit 71 is a brake lamp 72. A lower half portion of each lamp unit 71 is a turn signal lamp 73. The concave housing 41 is positioned between the pair of lamp units 71. Thus, the concave housing 41 and the pair of lamp units 71 can be more compactly disposed.

In each of the above embodiments, the opening and closing cover is inclined upward and rearward in the case where the opening and closing cover is closed, but the opening and closing cover may be in a vertical posture without being inclined in the case where the opening and closing cover is closed.

In the first embodiment described above, the tank to which the fuel oil is supplied is illustrated as an example of the fuel tank, but the fuel tank may be a tank filled with other fuel such as hydrogen.

In each of the above embodiments, the brake lamp and the turn signal lamp are combined to form the lamp unit, but other lamps may be combined to form the lamp unit. In addition, the lamp unit may be implemented by a single lamp.

In each of the embodiments described above, the rear carrier is disposed as an example of an optional part, but the optional part may be any part as long as it is disposed in the rear part of the vehicle, and may be, for example, a top case or a glove bar.

In each of the embodiments described above, the lamp unit is positioned above the filler port of the fuel tank and the charging port of the battery, but the lamp unit may be positioned below the filler port of the fuel tank and the charging port of the battery.

In addition, the straddle-type vehicle is not limited to a general vehicle in which a driver rides on a seat in a posture straddling the seat, and the straddle-type vehicle includes a scooter-type vehicle in which the driver rides on the seat without straddling the seat.

As described above, according to a first aspect, there is provided a rear structure of a straddle-type vehicle in which a fuel tank (35) or a battery (61) is disposed, and the rear structure of a straddle-type vehicle includes a concave housing (41) surrounding a filler port (fuel supply port 37) of the fuel tank or a charging port (63) of the battery, and an opening and closing cover (42) configured to be opened and closed to uncover and cover the filler port of the fuel tank or the charging port of the battery. The opening and closing cover is locked in a case where the opening and closing cover is closed, and the opening and closing cover is configured to be opened by its own weight in a case where the opening and closing cover is unlocked. According to this configuration, the opening and closing cover is configured to be automatically opened by its own weight by releasing the lock of the opening and closing cover. A complicated structure using a torsion spring, a damper, or the like having a large stroke for opening the opening and closing cover by its own weight becomes unnecessary. Accordingly, it is possible to improve user convenience with a simple structure.

According to the invention, in a side view, the opening and closing cover is in a vertical posture or inclined upward and rearward in the case where the opening and closing cover is closed. According to this configuration, water droplets and sand dust are less likely to enter the inside of the concave housing from above.

According to a third aspect, a swing shaft (43) of the opening and closing cover is provided along a lower edge of an opening of the concave housing. According to this configuration, the swinging shaft becomes inconspicuous, and design can be improved.

According to a fourth aspect, a place to put a cup of the filler port of the fuel tank is formed on an inner surface of the opening and closing cover in a case where the opening and closing cover is opened. According to this configuration, the workability of a filling work is improved by using the inner surface of the opening and closing cover as the place to put the cap during fuel supply.

According to a fifth aspect, a lighting device (lamp unit 31) is positioned above the filler port of the fuel tank or the charging port of the battery. According to this configuration, even in a case where the fuel tank or the battery is disposed below the seat, the lighting device is positioned above the concave housing and the visibility of the lighting device does not deteriorate. In a case where the fuel tank is disposed below the seat, the fuel is less likely to adhere to the lighting device, and it is not necessary to select a material having high resistance to the fuel as a material of the lighting device or to add a member for protecting the lighting device from the fuel.

According to a sixth aspect, in a side view, the opening and closing cover is disposed on a vehicle front side of the lighting device. According to this configuration, the lighting device serves as an eaves, and water droplets and sand dust are less likely to enter the inside of the concave housing from above.

Although the present embodiments have been described, other embodiments may be used in which the above embodiments and modification are combined entirely or partially.

In addition, the technology of the present invention is not limited to the above embodiments, and may be variously changed, replaced, or modified . Further, as long as the technical concept can be realized in another way by the progress of the technique or another derivative technique, the present invention may be implemented using the method.

## Claims

1. A rear structure of a straddle-type vehicle (1) in which a fuel tank (35) or a battery (61) is disposed, the rear structure of the straddle-type vehicle (1) comprising:
a concave housing (41) surrounding a filler port (37) of the fuel tank (35) or a charging port (63) of the battery (61); and
an opening and closing cover (42) configured to be opened and closed to uncover and cover the filler port (37) of the fuel tank (35) or the charging port (63) of the battery (61),
wherein the opening and closing cover (42) is locked in a case where the opening and closing cover (42) is closed, and
the opening and closing cover (42) is configured to be opened by its own weight in a case where the opening and closing cover (42) is unlocked
**characterized in that**, in a side view of the straddled vehicle, the opening and closing cover (42) is inclined upward and rearward in the case where the opening and closing cover (42) is closed.

2. The rear structure of the straddle-type vehicle (1) according to claim 1,
wherein a swing shaft (43) of the opening and closing cover (42) is provided along a lower edge of an opening of the concave housing (41), and
in a case where the opening and closing cover (42) is unlocked, the opening and closing cover (42) is tilted rearward around the swing shaft (43), and the opening and closing cover (42) is automatically opened downward by its own weight.

3. The rear structure of the straddle-type vehicle according to claim 1,
wherein a place to put a cap (36) of the filler port (37) of the fuel tank (35) is formed on an inner surface of the opening and closing cover (42) in a case where the opening and closing cover (42) is opened.

4. The rear structure of the straddle-type vehicle according to claim 1,
wherein a lighting device (31) is positioned above the filler port (37) of the fuel tank (35) or the charging port (63) of the battery (61).

5. The rear structure of the straddle-type vehicle according to claim 4,
wherein, in a side view, the opening and closing cover (42) is disposed on a vehicle front side of the lighting device (31).

## Patentansprüche

1. Hintere Struktur eines Grätschsitzfahrzeugs (1), in der ein Kraftstofftank (35) oder eine Batterie (61) angeordnet ist, wobei die hintere Struktur des Grätschsitzfahrzeugs (1) Folgendes umfasst:
ein konkaves Gehäuse (41), das einen Einfüllanschluss (37) des Kraftstofftanks (35) oder einen Ladeanschluss (63) der Batterie (61) umgibt; und
eine Öffnungs- und Schließabdeckung (42), die dazu konfiguriert ist, geöffnet und geschlossen zu werden, um den Einfüllanschluss (37) des Kraftstofftanks (35) oder den Ladeanschluss (63) der Batterie (61) freizulegen und abzudecken,
wobei die Öffnungs- und Schließabdeckung (42) in einem Fall verriegelt ist, in dem die Öffnungs- und Schließabdeckung (42) geschlossen ist, und
die Öffnungs- und Schließabdeckung (42) dazu konfiguriert ist, sich in einem Fall, in dem die Öffnungs- und Schließabdeckung (42) entriegelt ist, durch ihr Eigengewicht zu öffnen,
**dadurch gekennzeichnet, dass** in einer Seitenansicht des Grätschsitzahrzeugs die Öffnungs- und Schließabdeckung (42) in dem Fall, in dem die Öffnungs- und Schließabdeckung (42) geschlossen ist, nach oben und hinten geneigt ist.

2. Hintere Struktur des Grätschsitzfahrzeugs (1) nach Anspruch 1,
wobei eine Schwenkwelle (43) der Öffnungs- und Schließabdeckung (42) entlang einer Unterkante einer Öffnung des konkaven Gehäuses (41) bereitgestellt ist, und
in einem Fall, in dem die Öffnungs- und Schließabdeckung (42) entriegelt ist, die Öffnungs- und Schließabdeckung (42) um die Schwenkwelle (43) nach hinten geneigt ist und sich die Öffnungs- und Schließabdeckung (42) durch ihr Eigengewicht automatisch nach oben öffnet.

3. Hintere Struktur des Grätschsitzfahrzeugs nach Anspruch 1, wobei in einem Fall, in dem die Öffnungs- und Schließabdeckung (42) geöffnet ist, auf einer Innenoberfläche der Öffnungs- und Schließabdeckung (42) eine Stelle, um einen Verschluss (36) des Einfüllanschlusses (37) des Kraftstofftanks (35) zu platzieren, ausgebildet wird.

4. Hintere Struktur des Grätschsitzfahrzeugs nach Anspruch 1, wobei eine Beleuchtungsvorrichtung (31) oberhalb des Einfüllanschlusses (37) des Kraftstofftanks (35) oder des Ladeanschlusses (63) der Batterie (61) positioniert ist.

5. Hintere Struktur des Grätschsitzfahrzeugs nach Anspruch 4, wobei in einer Seitenansicht die Öffnungs- und Schließabdeckung (42) an einer Fahrzeugfrontseite der Beleuchtungsvorrichtung (31) angeordnet ist.

## Revendications

1. Structure arrière d'un véhicule de type à enfourcher (1) dans laquelle est disposé un réservoir de carburant (35) ou une batterie (61), la structure arrière du véhicule de type à enfourcher (1) comprenant :
un boîtier concave (41) entourant un orifice de remplissage (37) du réservoir de carburant (35) ou une prise de recharge (63) de la batterie (61) ; et
un couvercle d'ouverture et de fermeture (42) configuré pour être ouvert et fermé afin de découvrir et de recouvrir l'orifice de remplissage (37) du réservoir de carburant (35) ou la prise de recharge (63) de la batterie (61),
dans laquelle le couvercle d'ouverture et de fermeture (42) est verrouillé dans un cas où le couvercle d'ouverture et de fermeture (42) est fermé, et
le couvercle d'ouverture et de fermeture (42) est configuré pour s'ouvrir au moyen de son propre poids dans un cas où le couvercle d'ouverture et de fermeture (42) est déverrouillé
**caractérisée en ce que**, dans une vue latérale du véhicule enfourché, le couvercle d'ouverture et de fermeture (42) est incliné vers le haut et vers l'arrière dans le cas où le couvercle d'ouverture et de fermeture (42) est fermé.

2. Structure arrière de véhicule de type à enfourcher (1) selon la revendication 1,
dans laquelle un arbre d'orientation (43) du couvercle d'ouverture et de fermeture (42) est prévu le long d'un bord inférieur d'une ouverture du boîtier concave (41), et
dans un cas où le couvercle d'ouverture et de fermeture (42) est déverrouillé, le couvercle d'ouverture et de fermeture (42) est incliné vers l'arrière autour de l'arbre d'orientation (43), et le couvercle d'ouverture et de fermeture (42) s'ouvre automatiquement vers le bas au moyen de son propre poids.

3. Structure arrière de véhicule de type à enfourcher selon la revendication 1,
dans laquelle un emplacement pour placer un bouchon (36) de l'orifice de remplissage (37) du réservoir de carburant (35) est formé sur une surface intérieure du couvercle d'ouverture et de fermeture (42) dans un cas où le couvercle d'ouverture et de fermeture (42) est ouvert.

4. Structure arrière de véhicule de type à enfourcher selon la revendication 1,
dans laquelle un dispositif d'éclairage (31) est positionné au-dessus de l'orifice de remplissage (37) du réservoir de carburant (35) ou de la prise de recharge (63) de la batterie (61).

5. Structure arrière de véhicule de type à enfourcher selon la revendication 4,
dans laquelle, dans une vue latérale, le couvercle d'ouverture et de fermeture (42) est disposé sur un côté avant de véhicule du dispositif d'éclairage (31).
